## Europäisches Patentamt
## European Patent Office
## Office européen des brevets

(11) Publication number: **0 068 889**
**B1**

## EUROPEAN PATENT SPECIFICATION

(45) Date of publication of patent specification: **18.10.89**

(51) Int. Cl.⁴: **G 06 F 1/00,** H 04 N 5/64, F 16 M 11/10

(21) Application number: **82303408.7**

(22) Date of filing: **29.06.82**

(54) Adjustable mounting in CRT device.

(30) Priority: **29.06.81 US 278287**

(43) Date of publication of application:
**05.01.83 Bulletin 83/01**

(45) Publication of the grant of the patent:
**18.10.89 Bulletin 89/42**

(84) Designated Contracting States:
**DE FR GB IT SE**

(56) References cited:
FR-A-2 287 644
GB-A- 902 746
US-A-3 538 250

IBM TECHNICAL DISCLOSURE BULLETIN, vol. 23, no. 7A, December 1980, pages 2859-2860, New York (USA);

(73) Proprietor: **Honeywell Information Systems Inc.**
**200 Smith Street**
**Waltham County of Middlesex, Massachusetts 02154 (US)**

(72) Inventor: **Pendleton, Robert A.**
**63 Circuit Road**
**Dedham Massachusetts 02026 (US)**
Inventor: **Edfors, John E.**
**142 Pierce Road**
**Townsend Massachusetts 01469 (US)**
Inventor: **Whitford, Leonard G.**
**538R Salem Street**
**Wakefield Massachusetts 01880 (US)**
Inventor: **Conroy, Walter J.**
**4 Magnolia Drive**
**Acton Massachusetts 01720 (US)**

(74) Representative: **Votier, Sidney David et al**
**CARPMAELS & RANSFORD 43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to the mechanical positioning of CRT devices and more particularly to adjusting the tilt of the screen of CRT devices.

CRT devices are widely used as display terminal devices. It is therefore important to make such devices convenient and comfortable for an operator to use.

One problem encountered by operators concerns the amount and angle of incident light which falls on the screen surface of the CRT device and produces reflections, making it impossible in some instances for an operator to view information being displayed on the screen. Normally, the amount of incident light varies with the time of day and the placement or positioning of the CRT device on the operator's work space. In view of this, it becomes very desirable for an operator to be able to alter the viewing angle of the CRT's screen surface so as to minimize or eliminate reflections.

Some CRT devices have the tilt mechanism built into the device, with the CRT unit housing being mounted on a pivotal support base structure, or using a chassis which is pivotally mounted on a frame by two pivot pins.

These types of arrangement produce problems in structuring a suitable plastic housing for the CRT unit. Also, it becomes difficult to provide a tilt mechanism sturdy enough to meet stringent shock and vibration test requirements.

A somewhat similar arrangement for mounting a camera is shown in GB 902 746. The base unit has a front surface and a rear surface which both slope upwards towards the middle of the unit, and the CRT unit has rollers which roll on these surfaces. The CRT unit can thus be moved smoothly through a range of angular positions, and is clamped in a desired position by a clamping screw.

Accordingly, the primary object of the present invention is to provide a CRT device, permitting easy and wide range adjustment of the CRT screen viewing angle, which is inexpensive to construct.

Accordingly the present invention provides a CRT device comprising a CRT unit and a base unit on which the CRT unit stands, the base unit having a forward and downward sloping surface at the front and a rearward and downward sloping surface at the rear, and the CRT unit having bearing means engaging said surfaces to enable the CRT unit to be moved through a range of angular positions, characterized in that the bearing means comprise four rounded feet at the corners of a rectangle substantially centred on the centre of gravity of the CRT unit, which unit is a CRT display unit, each of said base unit surfaces comprises a pair of ramps, having side flanges, to receive and retain said feet, and the ramps of one of said surfaces having a plurality of smooth-edged indentations to provide corresponding stable angular positions for the CRT unit as the feet slide over them.

A CRT device embodying the invention will now be described, by way of example, with reference to the drawings, in which:

Figure 1 is a perspective view of the device with its two parts separated, and

Figure 2 shows a modified form of support.

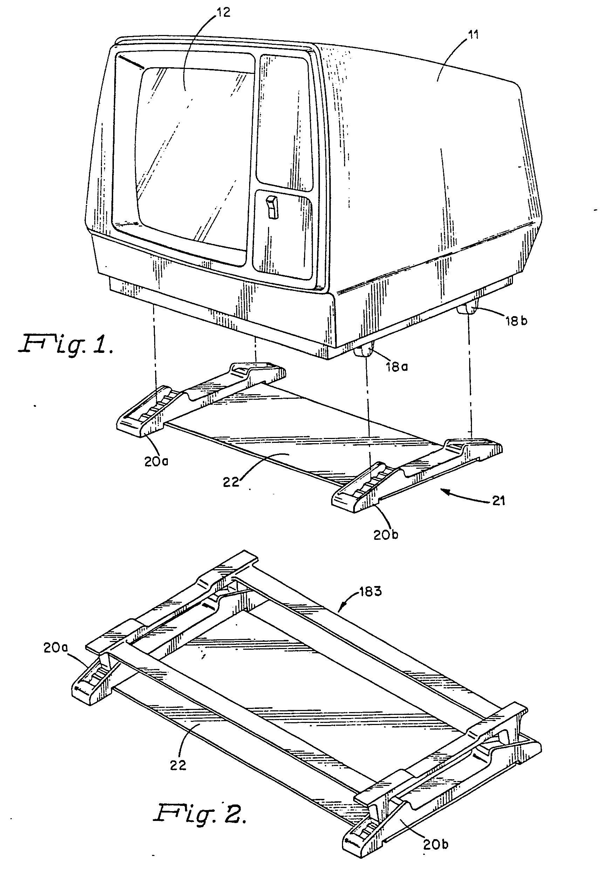

Figure 1 shows a CRT device comprising a CRT unit 11 and a base 21. The unit 11 has four feet screwed to its underside, two feet 18a and 18b being visible and the other two feet being at the other end of the unit 11. The base 21 consists of a steel base plate 22 having two moulded double ramps 20a and 20b of low friction material screwed to its two ends. As shown, each of the double ramps 20a and 20b comprises a front ramp portion divided into five steps or indentations, and a rear ramp portion which is smooth. The portion between the two ramp portions is cut back below the level of the tops of the ramp portions, to make it easier for the unit 11 to be picked up by being grasped at the bottom of the sides. The two ramp portions are each generally inclined at about 30° to the horizontal. Each of the ramp portions has a flange on each side and a flange at the lower end. The inner walls of the side flanges of the front ramp portions (which are indented portions) are slightly inclined towards instead of being vertical, to facilitate the moulding of the double ramps.

The unit 11, in use, rests with its four feet 18a, 18b, etc on the four respective ramp portions of the double ramps 20a and 20b. The front feet 18a, etc. rest in corresponding indentations in the front ramp portions, thereby locating the unit 11 firmly in position. However, by pushing the unit 11 forward or backwards, it can be slid over the ramp portions so that the front feet rest in any desired pair of the five pairs of indentations in the front ramp portions. The flanges of the ramp portions prevent the feet from sliding sideways off the ramp portions or from sliding off the ends of the ramp portions. The feet 18a, 18b, etc. and the indentations in the front ramp portions are rounded to ease the adjustment of the device.

It will be realized that moving the CRT unit 11 between one of the five positions and another, say forwardly, results in the front of the unit being lowered and the rear of the unit simultaneously being raised, as the front feet 18a, etc. slide down the forward ramp portions and the rear feet 18b, etc. slide up the rearward ramp portions. This means that the unit 11 is tilted through an angle approximately twice that which would result if only a single ramp portion were used at each end. In fact, the arrangement shown results in a change of tilt of about 3.5° of the CRT face 12 for each of the five steps.

Figure 2 shows a modified form of the support, in which in place of the four separate feet 18a, 18b etc. there is a single unit 183 comprising a rectangular frame having an integral foot at each corner. This frame may be attached to the CRT unit 11 by means of double sided sticky tape.

If the support means of Figure 2 is intended for use with only a single design of CRT unit 11, then maximum stability is achieved by placing the feet as close as possible to the corners of the unit 11. If however it is intended for use with CRT units of different designs, such that for some design the distance between the two feet at each end of the frame 183 is less than the front-to-back depth of the CRT unit, then the frame should be attached to the CRT unit so as to centre the centre or gravity of the unit over the centre of the frame, at least as seen from the side. Thus if the CRT unit has its centre of gravity towards its rear, for example, the frame 183 should be attached somewhat rearwardly of centre, so that the unit 11 projects forward over the frame 183. A template would normally be used for positioning the frame 183 on the unit 11.

The support of Figure 2 may be modified to accommodate CRT units of different widths. For this, the base plate 22 is divided into two half-plates, each carrying one of the two double ramps 20a and 20b. The two half-plates are in fact somewhat longer than half the maximum width of CRT unit, and are drilled so that they may be bolted together to space the double ramps 20a and 20b with any of a desired number of spacings. Also, the frame 183 is split into two half-frames, a right half-frame and a left half-frame, with the extending arms drilled so that the two half-frames can be correspondingly bolted together.

**Claims**

1. CRT device comprising a CRT unit (11) and a base unit (21) on which the CRT unit stands, the base unit having a forward and downward sloping surface at the front and a rearward and downward sloping surface at the rear, and the CRT unit having bearing means engaging said surfaces to enable the CRT unit to be moved through a range of angular positions, characterized in that the bearing means comprise four rounded feet (18) at the corners of a rectangle substantially centred on the centre of gravity of the CRT unit, which unit is a CRT display unit, each of said base unit surfaces comprises a pair of ramps (front of 20a, 20b; rear of 20a, 20b), having side flanges, to receive and retain said feet, and the ramps of one of said surfaces having a plurality of smooth-edged indentations to provide corresponding stable angular positions for the CRT unit as the feet slide over them.

2. A CRT device according to Claim 1, characterized in that the feet are formed at the corners of a rectangular frame which can be attached to the CRT unit.

3. A CRT device according to either previous claim, characterized in that the base unit and, as the case may be, the frame are formed as two half-units (and half-frames) which may be fixed together to provide width adjustment.

**Patentansprüche**

1. Gerät mit Kathodenstrahlröhre bestehend aus einer CRT-Einheit (11) und einer Trageinheit (21), auf welcher die CRT-Einheit steht, wobei die Trageinheit auf der Vorderseite eine nach vorn abfallende Fläche und auf der Rückseite eine nach hinten abfallende Fläche aufweist und die CRT-Einheit an diesen Flächen anliegende Haltemittel umfaßt, mit deren Hilfe die CRT-Einheit über einen Bereich von Winkelpositionen beweglich ist, dadurch gekennzeichnet, daß die Haltemittel vier abgerundete Füße (18) an den Ecken eines Rechtecks umfassen, welche zentrisch zum Schwerpunkt der als CRT-Monitor ausgebildeten CRT-Einheit liegen, wobei jeder der genannten Flächen der Trageinheit zwei Rampen (Vorderseite von 20a, 20b; Rückseite von 20a, 20b) aufweist, mit Seitenwänden zur Aufnahme und Führung der Füße, und wobei die Rampen einer der Flächen mehrere abgerundete Einschnitte haben zur Festlegung entsprechender stabiler Winkelpositionen für die CRT-Einheit, wenn die Füße über die Rampen gleiten.

2. Gerät nach Anspruch 1, dadurch gekennzeichnet, daß die Füße an den Ecken eines rechtwinkeligen Rahmens vorgesehen sind, der an der CRT-Einheit befestigt werden kann.

3. Gerät nach einem vorangehenden Anspruch, dadurch gekennzeichnet, daß die Trageinheit und ggf. der Rahmen aus zwei Hälften (und Halbrahmen) bestehen, die zur Einstellung einer gewünschten Breite aneinander befestigt werden.

**Revendications**

1. Un dispositif à tube cathodique comprenant une unité à tube cathodique (11) et une unité d'embase (21) sur laquelle se place l'unité à tube cathodique, l'unité d'embase ayant une surface en pente vers l'avant et vers le bas à l'avant et une surface en pente vers l'arrière et vers le bas à l'arrière, et l'unité à tube cathodique ayant des moyens de support en prise avec lesdites surfaces pour permettre de déplacer l'unité à tube cathodique sur toute une gamme de positions angulaires, caractérisé en ce que le moyen de support comporte quatre pieds arrondis (18) aux coins d'un rectangle sensiblement centré sur le centre de gravité de l'unité à tube cathodique, laquelle unité est une unité de visualisation à tube cathodique, chacune desdites surfaces de l'unité d'embase comprend une paire de rampes (avant de 20a, 20b; arrière de 20a, 20b), ayant des flasques latéraux, afin de recevoir et maintenir lesdits pieds, et les rampes de l'une desdites surfaces ayant une pluralité de dentelures à bord lisse pour assurer des positions angulaires stables correspondantes pour l'unité à tube cathodique quand les pieds glissent sur elles.

2. Un dispositif à tube cathodique selon la revendication 1, caractérisé en ce que les pieds sont formés aux coins d'un cadre rectangulaire qui peut être attaché à l'unité à tube cathodique.

3. Un dispositif à tube cathodique selon l'une quelconque des revendications précédentes, caractérisé en ce que l'unité d'embase et, selon le cas, le cadre sont formés sous forme de deux demi-unités (et demi-cadres) qui pourront être fixées l'une à l'autre pour assurer le réglage en largeur.

*Fig.1.*

*Fig.2.*